# EUROPÄISCHE PATENTSCHRIFT

(11) **EP 1 571 128 B1**
(45) Veröffentlichungstag und Bekanntmachung des Hinweises auf die Patenterteilung: **26.09.2012**
(21) Anmeldenummer: 04005229.2
(22) Anmeldetag: 05.03.2004
(51) Int. Cl.: C02F 1/50, A01N 25/02, A01N 59/00, A01N 25/04

(54) **Verwendung einer Mischung zur Behandlung von wasserführenden Systemen in der Papierindustrie**
Use of a mixture for treating water circulation systems in the paper industry
Utilisation d'un mélange pour le traitement de circuits d'eau dans l'industrie papetière

(43) Veröffentlichungstag der Anmeldung: 07.09.2005
(73) Patentinhaber: BK Giulini GmbH, 67065 Ludwigshafen (DE)
(72) Erfinder: Ulubay, Hasan, Dr., 67125 Schauernheim (DE); Lunkenheimer, Rudolf, Dr., 55263 Wackernheim (DE); Höötmann, Ute, Dr., 68526 Ladenburg (DE); Imhof, Joachim, 67065 Ludwigshafen (DE); Weih, Heinz-Willi, 67061 Ludwigshafen (DE)

(56) Entgegenhaltungen:
- EP-A- 0 478 086
- EP-A- 1 391 430
- WO-A-01/55036
- US-A- 4 990 334
- US-B1- 6 419 879

## Beschreibung

Die Erfindung betrifft die Verwendung gemäß Anspruch 1.

Das Wachstum von Mikroorganismen im wässrigen Milieu ist ein natürlicher Vorgang, der in industriellen Systemen weitreichende Folgen haben kann. So gehören die Behinderung des Wärmeübergangs bei Wärmetauschern, die Verminderung der Kühlleistung in Kühltürmen, das Verstopfen von Filtern, Produktionsstörungen in der Papierproduktion u.v.a.m. zu den Folgen unerwünschten biologischen Wachstums.

Zahlreiche Vorschläge zur Lösung dieser Probleme wurden gemacht. Stand der Technik z.B. in der Papierproduktion ist der Einsatz von Mikrobiziden wie bestimmten Bromverbindungen, Isothiazolonen, Dithiocarbamaten, Thiocyanaten, quaternären Ammoniumverbindungen u.a. (Weigl J, Grenz R, Baumgarten HL, "Grundlagen der Chemie für Papieringenieure" PTS Verlag München 1992 5.2-5.45). Nachteil dieser Substanzen ist eine vergleichsweise hohe Einsatzmenge, die unter Berücksichtigung ökonomischer Aspekte lediglich Dosiermengen erlaubt, die die Mikrobiologie hemmen, jedoch nicht weitgehend abtöten. Zudem sind diese Substanzen in der Regel mit einem relativ hohen Gefahrenpotential behaftet, so dass auch aus diesem Grunde ihr Einsatz beschränkt werden sollte.

Ein weiterer Weg zur antimikrobiellen Behandlung von industriellen Wasscrsystemen ist der Einsatz von Oxidationsmitteln, der sehr verbreitet ist. In Wassersystemen mit einer hohen organischen Fracht kann jedoch die Dosierung oxidierender Biozide durch die "Chlorzehrung" ineffektiv werden (Standard methods for the examination of water and waste water, 16th edition, methods § 409, p 316-319). Durch Zusatz von Ammonium oder Aminoderivaten zu solchen belasteten Wässern wird die Bildung von Chloraminen erreicht, die keiner so starken "Chlorzehrung" unterworfen sind (Atasi Khalil z. et al., Proc. Annu. Conf. Am. Water Works Assoc., 1988 (Pt 2), pp 1763-1770).

In hoch organisch belasteten Systemen relativ stabile und sehr gut wirksame oxidierende Biozide können durch die in-situ Herstellung aus Ammoniumsalzen und Oxidationsmitteln hergestellt werden (EP 0517102A1). Die Herstellung ist jedoch nur unter hohen technischen, finanziellen und personellen Aufwand gewährleistet und daher schlecht praktikabel.

Zur Lösung solcher mikrobiell verursachter Probleme wurden auch Öl-in-Wasser Emulsionen als nicht mikrobiozide Systeme vorgeschlagen (EP0731776B1). Die Praxiserfahrung zeigt jedoch, dass in der überwiegenden Zahl der Fälle diese Produkte bedingt tauglich sind.

In der EP 0 478 086 A2 wird eine desinfizierende Reinigerzusammensetzung in Form einer stabilen Mikroemulsion offenbart.

In US 6,419,879 B1 wird ein Biozid bestehend aus einem Oxidationsmittel, einer stabilisierten Natriumhypobromit Lösung und einem Tensid beansprucht.

Aufgabe der Erfindung war es daher, zur Desinfektion hoch organisch und mikrobiell belasteter industrieller Wasserkreisläufe ein Mikrobiozidsystem zu entwickeln, das gegenüber den bekannten Bioziden eine verminderte Toxizität aufweist, leicht und zuverlässig handhabbar ist und das mikrobielle Wachstum mitsamt seinen unerwünschten Folgen durch ökonomisch sinnvolle Einsatzmengen sicher verhindert.

Die Aufgabe wurde erfindungsgemäß gelöst durch die nachfolgenden Ansprüche:
1. Verwendung einer Mischung zur Behandlung von wasserführenden Systemen in der Papierindustrie, bestehend aus
   a. Wasser in Mengen von 0 bis 25 Gew.-% und
   b. mindestens einem Lösungsvermittler und
   c. einem Tensid oder Mischungen von Tensiden und
   d. einem Kohlenwasserstoff ausgewählt aus Isoparaffin oder Mischungen von Isoparaffinen mit Siedepunkten bis 320 °C in Kombination mit dem Oxidationsmittel Hypochlorige Säure oder deren Salze
2. Verwendung einer Mischung gemäß Anspruch 1, dadurch gekennzeichnet, dass als Lösungsvermittler Isopropanol und/oder Ethylenglykolmonobutylether und/oder Dipropylenglykolmonoethylether eingesetzt wird.
3. Verwendung einer Mischung gemäß Anspruch 1, dadurch gekennzeichnet, dass als Tensid ein nichtionisches und/oder mindestens ein anionisches und/oder ein kationisches Tensid oder Mischungen davon, bevorzugt Kombinationen aus nichtionischen mit anionischen oder nichtionischen mit kationischen Tensiden eingesetzt werden.
4. Verwendung einer Mischung gemäß Anspruch 1, dadurch gekennzeichnet, dass das mengenmäßige Verhältnisvon Lösungsvermittler/ /Kohlenwasserstoff zwischen 0 und 5, bevorzugt zwischen 0 bis 2 und das mengenmäßige Verhältnis von

Tensid/Kohlenwasserstoff zwischen 0,1 und 5, bevorzugt zwischen0,2 und 2 liegt. Unter Lösungsvermittler sind solche Stoffe zu verstehen, die durch ihre Gegenwart andere, in einem bestimmten Lösungsmittel praktisch unlösliche Verbindungen in diesem Lösungsmittel löslich oder emulgierbar machen. Der Lösungsvermittler oder ein Gemisch von Lösungsvermittlern kann eingesetzt werden, wobei bevorzugt Isopropanol und/oder Ethylenglykolmonobutylether und/oder Dipropylenglykolmonomethylether verwendet werden. Das mengenmäßige Verhältnis Lösungsvermittler/Kohlenwasserstoff liegt hierbei zwischen 0 und 5, bevorzugt zwischen 0 und 2.

Als Tenside werden bevorzugt nichtionische und/oder anionische und/oder kationische Typen, besonders bevorzugt Kombinationen aus nichtionischen mit anionischen oder nichtionischen mit kationischen Tensiden verwendet, wobei das mengenmäßige Verhältnis Tensid/Kohlenwasserstoff zwischen 0,1 und 5, bevorzugt zwischen 0,2 und 2 liegt. Im Allgemeinen werden unter anionischen Tensiden die Salze grenzflächenaktiver Säuren verstanden. Es ist aber auch möglich, dass ein gewisser Anteil des anionischen Tensids als freie Säure vorliegen kann. Im Fall eines Salzes werden als Kationen bevorzugt Na⁺ und/oder K⁺ und/oder NH₄⁺ verwendet.

Als Gegenanionen der kationischen Tenside werden bevorzugt Cl⁻ und/oder Br⁻ verwendet. Liegen in der Mischung anionische und kationische Tenside gleichzeitig vor, sind solche Tenside bevorzugt, die nicht über eine Salzbildung zum Ausfällen neigen und eine einfache Handhabung gewährleisten.

Als Kohlenwasserstoffe werden, Isoparaffine oder Mischungen von Isoparaffinen mit Siedepunkten bis zu 320°C oder Paraffine oder Terpene verwendet.

Es war überraschend festzustellen, dass die kombinierte Anwendung der beschriebenen Bestandteile in ihrer Wirksamkeit weit über die addierten Effekte der Einzelkomponenten hinausgeht.

Technisch sinnvoll ist es, die Mischungen, bestehend aus den Komponenten a. bis d., in konzentrierter Form anzubieten, weshalb der Wassergehalt dieser Mischungen bei 0 bis 25 Gew.-% liegt. Die Mischungen finden Verwendung in wasserführenden Systemen in der Papierindustrie, wobei sie diesen Systemen über eine kontinuierliche oder semikontinuierliche Dosierung zugeführt werden.

Abhängig von der Konzentration der Mischungen und des Einsatzbereiches liegen im Fall der Mischung die Einsatzkonzentrationen bei 0,1 bis 300ppm, bevorzugt bei 0,3 bis 150ppm. Im Falle verdünnter Formulierungen können diese Konzentrationen selbstverständlich überschritten werden.

Die Konzentration des Oxidationsmittels liegt bei 0,02 bis 50ppm als Cl₂, bevorzugt bei 0,03 bis 25 ppm als Cl₂.

Die nachfolgenden Beispiele sollen die Erfindung näher erläutern, ohne diese einzuschränken.

**System A**: Mischung, enthaltend 12,5% Wasser, 46,8 Gew.% Tensidmischung (nichtionisch/anionisch), 40,7 Gew.% Isoparaffin

### Beispiel 1

An einer standardisierten bakteriellen Kultur wurden vergleichende Tests mit dem beschriebenen Biozidsystem durchgeführt. Eingesetzt wurde hierzu eine Reinkultur von *Pseudomonas putida* ATCC 12633, angezüchtet in Caseinpepton-Sojamehlpepton Boullion (Merck 105459) und eingestellt auf einen Titer von ca. 1x10⁹ CfU/ml. Die Bestimmung der Keimzahlen erfolgte in Anlehnung an DIN 54379.

**Tabelle 1**

| Produkt | Einsatzmenge (ppm) | Keimzahl (CfU/ml) |
|---|---|---|
| Kontrolle | - | 1x10⁹ |
| NaOCl | 2 (als Cl₂) | 3,2x10⁶ |
| System A | 2 | 1x10⁹ |
| System A + NaOCl | 1 + 1 (als Cl₂) | 8,4x10⁴ |

Wie der Tabelle zu entnehmen ist, zeichnet sich das erfindungsgemäß eingesetzte Mikrobiozidsystem gegenüber den Vergleichssubstanzen durch eine bessere Wirksamkeit bei vergleichbarer Einsatzmenge aus.

### Beispiel 2

An einer Papiermaschine im Technikumsmaßstab wurde System A in Kombination mit Chlorbleichlauge im Vergleich zu einem konventionellen Biozid getestet (kontinuierliche Dosierung). Verwendet wurde ein Stoffgemisch aus Zeitungsdruck, Illustrierter und Karton im Verhältnis 1:1:1. Die Keimzahlbestimmung wurde frühestens 15 min. nach Dosierstart der Biozide vorgenommen.

**Tabelle 2**

| Produkt | Einsatzmenge in ppm | Keimzahl (CfU/ml) |
|---|---|---|
| 0-Kontrolle | - | 3,9x10⁷ |
| 20%ige DBNPA Formulierung (handelsüblich) | 25 | 2,9x10⁴ |
| System A | 25 | 3,5x10⁷ |
| NaOCl | 25 (als Cl₂) | 5,3x10⁵ |
| System A + NaOCl | 25 + 5 NaOCl (als Cl₂) | 6,9x10³ |

Die Tabelle 2 zeigt die antimikrobielle Wirksamkeit eines erfindungsgemäß formulierten Biozidsystems.

## Patentansprüche

1. Verwendung einer Mischung zur Behandlung von wasserführenden Systemen in der Papierindustrie, bestehend aus
a. Wasser in Mengen von 0 bis 25 Gew.-% und
b. mindestens einem Lösungsvermittler und
c. einem Tensid oder Mischungen von Tensiden und
d. einem Kohlenwasserstoff ausgewählt aus Isoparaffin oder Mischungen von Isoparaffinen mit Siedepunkten bis 320 °C in Kombination mit dem Oxidationsmittel Hypochlorige Säure oder deren Salze

2. Verwendung einer Mischung gemäß Anspruch 1, **dadurch gekennzeichnet, dass** als Lösungsvermittler Isopropanol und/oder Ethylenglykolmonobutylether und/oder Dipropylenglykolmonoethylether eingesetzt wird.

3. Verwendung einer Mischung gemäß Anspruch 1, **dadurch gekennzeichnet, dass** als Tensid ein nichtionisches und/oder mindestens ein anionisches und/oder ein kationisches Tensid oder Mischungen davon, bevorzugt Kombinationen aus nichtionischen mit anionischen oder nichtionischen mit kationischen Tensiden eingesetzt werden.

4. Verwendung einer Mischung gemäß Anspruch 1, **dadurch gekennzeichnet, dass** das mengenmäßige Verhältnisvon Lösungsvermittler/ /Kohlenwasserstoff zwischen 0 und 5, bevorzugt zwischen 0 bis 2 und das mengenmäßige Verhältnis von Tensid/Kohlenwassersto zwischen 0,1 und 5, bevorzugt zwischen 0,2 und 2 liegt.

## Claims

1. Utilisation of a mixture for treating water-bearing systems in the paper industry, consisting of
a. water in quantities of 0-25 weight-%, and
b. at least one solutizer, and
c. one tenside or mixtures of tensides, and
d. one hydrocarbon selected from isoparaffin or mixtures of isoparaffins with boiling points up to 320 °C in combination with the oxidizing agent of hypochlorous acid or its salts

2. Utilisation of a mixture as per claim 1 **characterised by** the fact that isopropanol and/or ethylene glycol monobutyl ether and/or dipropylene glycol monoethyl ether are used as solutizers.

3. Utilisation of a mixture as per claim 1 **characterised by** the fact that a non-ionic and/or at least one anionic and/or a cationic tenside or mixtures of them are used as the tenside, preferably combinations of non-ionic with anionic or non-ionic with cationic tensides.

4. Utilisation of a mixture as per claim 1 **characterised by** the fact that the quantitative ratio of solutizer/hydrocarbon is between 0 and 5, preferably between 0-2, and the quantitative ratio of tenside/hydrocarbon is between 0.1 and 5, preferably between 0.2 and 2.

## Revendications

1. Utilisation d'un mélange pour le traitement de systèmes aquifères dans l'industrie papetière, composé :
a. de 0 à 25 % d'eau et
b. d'au moins un agent solubilisant et
c. d'un tensioactif ou de mélanges de tensioactifs et
d. d'un hydrocarbure choisi parmi l'isoparaffine ou des mélanges d'isoparaffines aux points d'ébullition atteignant 320 °C, combiné avec l'oxydant, un acide hypochloreux ou les sels de celui-ci.

2. Utilisation d'un mélange selon la revendication 1, **caractérisé en ce que** comme agent solubilisant est utilisé de l'isopropanol et/ou de l'éther monobutylique de l'éthylène glycol et/ou de l'éther monoéthylique du dipropylène glycol.

3. Utilisation d'un mélange selon la revendication 1, **caractérisé en ce que** comme tensioactifs sont utilisés un tensioactif non ionique et/ou au moins un tensioactif anionique et/ou un tensioactif cationique ou un mélange d'entre eux, de préférence des combinaisons de tensioactifs non ioniques avec des anioniques ou de non ioniques avec des cationiques.

4. Utilisation d'un mélange selon la revendication 1, **caractérisé en ce que** le rapport quantitatif agent solubilisant / hydrocarbure se situe entre 0 et 5, de préférence entre 0 et 2, et **en ce que** le rapport quantitatif tensioactif / hydrocarbure se situe entre 0,1 et 5, de préférence entre 0,2 et 2.
